# EUROPEAN PATENT SPECIFICATION

(11) **EP 2 106 053 B1**
(45) Date of publication and mention of the grant of the patent: **18.08.2010**
(21) Application number: 08300161.0
(22) Date of filing: 27.03.2008
(51) Int. Cl.: H04J 3/14, H04J 3/16, H04Q 11/00

(54) **Optimized Passive Optical Network (PON) protection to minimize packet loss at switching time.**
Optimierter Schutz eines passiven optisches Netzes zur Minimierung des Paketverlusts zum Schaltzeitpunkt
Protection de réseau optique passif optimisé pour minimiser la perte de paquets au moment de la commutation

(43) Date of publication of application: 30.09.2009
(73) Proprietor: MITSUBISHI ELECTRIC R&D CENTRE EUROPE B.V., 1119 NS Schiphol-Rijk (NL); MITSUBISHI ELECTRIC CORPORATION, Chiyoda-ku Tokyo 100-8310 (JP)
(72) Inventor: Lavillonnier, Eric, 35530 Noyal Sur Vilaine (FR); Pautonnier, Sophie, 35580 Goven (FR)
(74) Representative: Domenego, Bertrand

(56) References cited:
- WO-A-2005/117300
- "A broadband optical access system with enhanced survivability; G.983.5 (01/02)" ITU-T STANDARD IN FORCE (I), INTERNATIONAL TELECOMMUNICATION UNION, GENEVA, CH, no. G.983.5 (01/02), 6 January 2002 (2002-01-06), XP017401189

## Description

The present invention relates to a Passive Optical Network for granting a high quality secure access when an optical line is damaged and a method for implementing the secure access in the Passive Network (PON).

Passive Optical Networks are well known as being one among the two architectures of the access part of optical networks.

According to the Passive Optical Network (PON) architecture, also called Point to Multipoint architecture, a conventional Passive Optical Network (PON) comprises an Optical Line Termination (OLT) connected to a switch belonging to a high rate optical networking infrastructure through a router and a set of optical splitters wherein each optical splitter is upwardly connected to the Optical Line Termination (OLT) through a different respective dedicated fibre.

The Passive Optical Network also comprises several user terminals, also called Optical Network Units (ONUs) grouped within clusters.

The user terminals of each cluster share one same fibre from the Optical Line termination to the splitter respectively associated to the corresponding cluster.

The user terminals of each cluster are connected to the corresponding optical splitter through different respective dedicated fibres.

In the Passive Optical Network architecture, since only one fibre is shared by the user terminals of one cluster both for uplink (from the splitter of the cluster to OLT) and downlink (from OLT to the splitter associated to the user terminals of the cluster), uplink and downlink data are transmitted simultaneously using two distinct wavelengths of the laser. Such a downlink/uplink access scheme is referred as wavelength duplex access.

In the uplink direction, a time slot is allocated repeatedly to each user of a cluster, wherein transmission of data is enabled.

Time slots are configured into a frame in such a way to avoid simultaneous transmission which could collide. Such an uplink access scheme from the user terminals to the OLT is called a Time Division Multiplexing Access (TDMA).

Some users have subscribed to have a very secure access network for security reason.

In case of PON optical access network, the events that can basically damage the link between the OLT and a optical network unit is the cut or another type of partial/entire damage of the fibre either between a splitter and the OLT or between the optical network unit and the splitter.

In order to prevent this troubleshooting, redundancy of the optical path is needed.

In the case of Passive Optical Networks, due to the complexity of their architecture, several redundancy configurations have been considered in the ITU G983.5 standard as redundancy of the path only between the OLT and the optical splitter, full redundancy etc.

The full redundancy architecture corresponding to the type C case in the ITU G983.5 standard provides an efficient protection for users who subscribed a high quality security access.

In this case, two sets of users can be distinguished. A first set of unprotected Optical Network units are connected to only one optical fibre namely to one optical splitter. A second set of protected Optical Network Units are connected to two different optical fibres, namely to two different optical splitters, each optical splitter being connected to a different optical fibre. In this latter case, an optical network unit belongs to two different clusters.

The technical problem is the loss of data packets for a protected optical network unit being transmitting through a main optical fibre when a cut of the first fibre occurs and a handover process must be carried out to switch the protected optical network units onto a backup optical fibre that may carry some data traffic of other unprotected optical network units.

Indeed, a significant loss of data packets might be critical even unacceptable for an end user connected to a protected optical network unit.

Document D2: WO 2005/117300 A discloses a dynamic bandwidth allocation method in a PON network where a shorter delay is experienced for transfer of data on the secondary communication path as compared to that in the prior art, where it is necessary fo first establish a connection before transfer of data over that connection on the secondary coomunication path is possible.

The aim of the invention is to provide a Passive Optical Network that minimizes the loss of packets during a handover of the traffic data for a protected optical network unit from a main optical fibre to a backup optical fibre.

The invention accordingly relates to a Passive Optical Network with enhanced protection comprising an optical line termination connected respectively to a first and a second optical fibre, a first set of unprotected optical network units connected to the optical line termination through only the first optical fibre and a second set of protected optical network units connected to the optical line termination through both the first and second optical fibres,
the optical line termination having a first and a second dynamic transmission resources allocation units able to respectively and separately compute and allocate transmission resources for a first TDMA uplink access to be used by the corresponding optical network units connected to the first fibre and for a second TDMA uplink access to be used by the corresponding optical network units connected to the second optical fibre,
each unprotected optical network unit of the first set being able to transmit timely in the first TDMA uplink user data according to a specific current first transmission resource prescribed by the first dynamic transmission resources allocation unit and able to send a current status of a user access buffer representative of a volume of data to be transmitted on the first TDMA uplink by the each unprotected optical network unit to the first dynamic transmission resources allocation unit,
characterized in that
each protected optical network unit of the second set having a duplication data unit with two different user access buffers able to transmit timely and respectively in the first and the second TDMA uplink access the same user data according to a first current transmission resource and a second current transmission resource as respectively prescribed by the first and the second dynamic transmission resources allocation unit, and able to send current statuses of the user access buffers representative of a first current volume of data and a second current volume of data to be transmitted respectively on the first TDMA uplink and the second TDMA uplink by the each protected optical network unit respectively to the first and second dynamic transmission resources allocation unit,
the optical line termination comprises a link between the first and the second dynamic transmission resources allocation units for exchanging separately computed values of first and second transmission resources to be allocated to the protected optical network units of the second set in order to align the computed first and second transmission resources corresponding to a same protected optical network unit by taking into account the current statuses of the user access buffers.

According to particular embodiments, the Passive Optical Network comprises one or more of the following characteristics:
- the first and the second dynamic transmission resources allocation units are a single and a same unit ;
- it comprises a third set of unprotected optical network units connected to the optical line termination through only the second optical fibre ;
- the optical line termination comprises a first and a second multipoint control unit respectively connected to the first and second optical fibre and able to manage the respective TDMA uplink access corresponding to the first and second optical fibre, and in that
   the first and second multipoint control units are respectively connected to the first and the second dynamic transmission resources allocation units and able to exchange signalling regarding current transmission resources and current status of the buffers for protected optical network units corresponding to the first and second TDMA uplink access and commands to align the first and second transmission resources for a same protected optical network unit corresponding to the first and second TDMA access ;
- the first and second multipoint control unit comprises respectively a first and a second de-multiplexer, a first and a second bank of FIFO buffers respectively connected to the de-multiplexers and a first and a second multiplexing unit respectively connected to outputs of the first and second bank of FIFO buffers ;
- the each multiplexing unit comprises an inhibition unit able to selectively mask data corresponding to data of a subset of optical network units among the protected optical network units ;
- the optical line termination comprises a high rate multiplexing unit with two inputs connected respectively to upstream outputs of the first and second multipoint control units ;
- the optical line termination comprises a protection monitoring and handover management unit able to control the inhibition units,
   the protected optical network units comprises a protection protocol management unit able to exchange protection signalling with the protection monitoring and handover management unit (49) through the first and second optical fibres ;
- the signalling comprising exchange of two bytes PST type messages, K1 and K2 as defined in the ITU standard G 841 and G 983.5 ;
- the K1 and K2 bytes are carried inside the Multi Point Mac layer as defined in IEEE 802.3ah into a specific Ethernet frame to carry these bytes, and in that the specific frame comprises a 6 bytes first field containing Destination Address information, a 6 bytes second field containing Source Address information, a 2 bytes third field containing a new Length/Type information, a 2 bytes fourth field containing Opcode information, a one byte fifth field containing K1 byte information, a one byte sixth field containing K2 byte information, a 42 bytes seventh field containing Padding information, a 4 bytes eighth field containing FCS information.

The invention also relates to a method of protection in a Passive Optical Network comprising an optical line termination connected respectively to a first and a second optical fibre, a first set of optical network units connected to the optical line termination through only the first optical fibre and a second set of protected optical network units connected to the optical line termination through both the first and second optical fibres,
the optical line termination having a first and a second dynamic transmission resources allocation unit able to respectively and separately allocate transmission resources for a first TDMA uplink access to be used by the corresponding optical network units connected to the first fibre and for a second TDMA uplink access to be used by the corresponding optical network units connected to the second optical fibre,
each unprotected optical network unit of the first set being able to transmit timely in the first TDMA uplink user data according to a specific current first transmission resource prescribed by the first dynamic transmission resources allocation unit and able to send a current status of a user access buffer representative of a volume of data to be transmitted on the first TDMA uplink by the each un protected optical network unit to the first dynamic transmission resources allocation unit,
each protected optical network unit of the second set having a duplication data unit with two different user access buffers able to transmit timely and respectively in the first and the second TDMA uplink access the same user data according to a first current transmission resource and a second current transmission resource as respectively prescribed by the first and the second dynamic transmission resources allocation unit, and able to send current statuses of the two user access buffers representative of a first current volume of data and a second current volume of data to be transmitted respectively on the first TDMA uplink and the second TDMA uplink by the each protected optical network unit respectively to the first and second dynamic transmission resources allocation unit,
the optical line termination comprising a link between the first and the second dynamic transmission resources allocation units,
characterized in that it comprises the following steps consisting of :
receiving respectively current status of each user access buffer and current status for each user access buffer by respective first and second dynamic transmission resources allocation unit,
computing values of current transmission resources to be allocated to the optical network units,
exchanging between the first and the second dynamic transmission resources allocation units, the current respective transmission resources values computed in step through the link, and
allocating a modified first and a modified second transmission resource to a same protected optical network unit depending on current first and second transmission resources and current statuses of buffers so that modified transmission resources of the same protected optical network are very close to each other and tend to be the same.

According to particular embodiments, the method comprises one or more of the following characteristics:
the allocating step for a same protected optical network unit comprises the following steps:
   - calculating a first assignment value as the minimal value among the first and the second current transmission resources,
   - calculating a first current rest of the first buffer as the difference between the first current volume of data and the first current transmission resource,
   - calculating a second current rest of the second buffer as the difference between the second current volume of data and the second current transmission resource,
   - calculating a second assignment value as the difference between the first assignment value and the absolute value of the difference between the first and the second current rest, if the difference between the first assignment value and the absolute value is positive, otherwise calculating the second assignment value as equal to zero,
   - determining the first modified transmission resource as the first assignment value if the first current rest is higher than the second current rest, otherwise determining the first assignment value as the second modified transmission resource,
   - determining the second modified transmission resource as the second assignment value if the first assignment value has been determined as the first modified transmission resource, otherwise determining the second assignment value as the first modified transmission resource ;
   - the method comprises a step consisting of :
      when a default is detected, executing handover by switching partly or totally the traffic data flow from the second optical fibre to the first optical fibre through enabling a second inhibition unit for data received from the second optical fibre and disabling a first inhibition unit for data received from the first optical fibre,
      disabling the inhibition unit of the first multiplexer is either total and all the data of the first TDMA uplink corresponding to the optical network units can pass and can be multiplexed or partial and the data of the first TDMA uplink corresponding to selected optical network units can pass and can be multiplexed ;
      enabling the second inhibition unit of the second multiplexer in respect to disabling the inhibition unit is either total by masking all the data of the second TDMA uplink or partial by selectively masking the data of the second TDMA uplink ;
   - the method comprises steps consisting of :
      exchanging protection management data, and
      testing whether a default occurs ; and
   - wherein protection management data are defined in the ITU standard G 841 and G 983.5.

A better understanding of the invention will be facilitated by reading the following description, which is given solely by way of examples and with reference to drawings, in which:
- Figure 1 is an architectural view of an embodiment of a passive optical network providing a high quality secure access according to the invention,
- Figure 2 is a flow chart of a protection management method implemented in the architecture of the figure 1,
- Figure 3 is a view of an Ethernet frame for carrying signalling required to implement the protection management method of the figure 2,
- Figure 4 is an architectural view of a first variant of the embodiment of figure 1,
- Figure 5 is an architectural view of a second variant of the embodiment of figure 1.

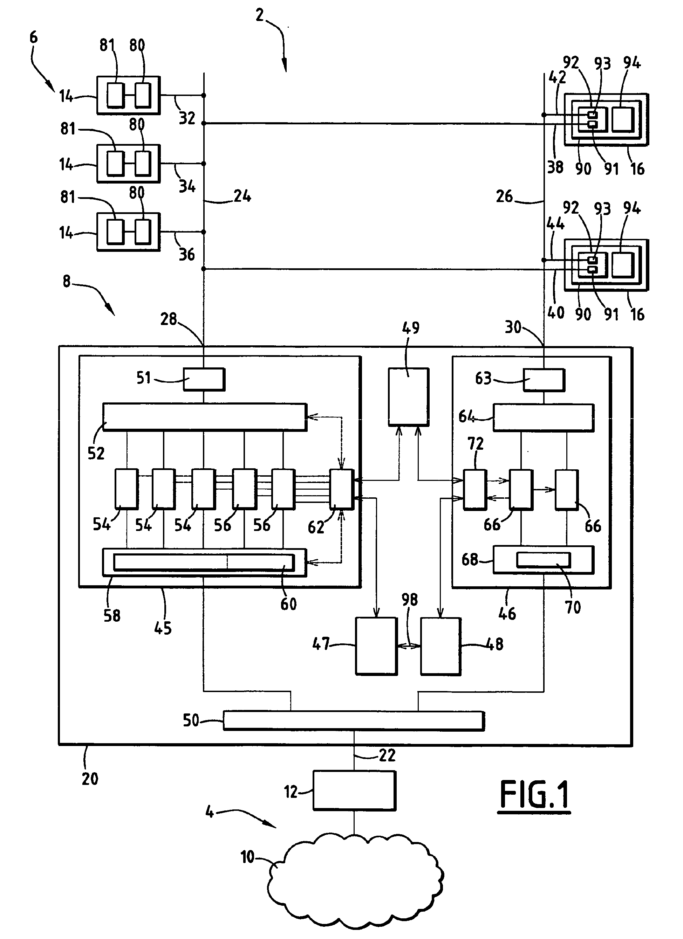

According to figure 1, an optical network 2 comprises a high rate data networking infrastructure part 4, a user terminal part 6 and an optical access part 8 linking the networking infrastructure 4 to the user terminal part 6.

The high rate data networking infrastructure part 4 comprises a high rate network 10 and a router 12 connected to the high rate network 10.

The user terminal part 6 comprises a first set of unprotected user network units 14 and a second set of protected user network units 16 which are connected to the router 12 through the optical access part 8.

The optical access part 8 comprises as interface relative to the networking infrastructure part 4 an optical line termination 20 connected to the router 12 through a high rate fibre or copper line 22.

The optical access part 8 comprises a first optical fibre 24 and a second optical fibre 26 that interconnect respectively the first set of unprotected optical network units 14 and the second set of protected optical network units 16 through a set of splitters not shown to the optical line termination 20 at a respective first 28 and a respective second optical port 30.

Each unprotected optical network unit 14 of the first set, here a triplet, is connected only to the first optical fibre 24 through one single and different line 32, 34, 36 via a splitter or a set of splitters not shown. The splitters are not illustrated in the figure 1 since they are transparent and since the definition of an optical path between an optical network unit and OLT can be based on a chain of a line 32, 34, 36 and the first optical fibre 24. A splitter plays the role of a node of connection between a line 32, 34, 36 and the first optical fibre 24, such a node being shown in figure 1.

Each protected optical network unit 16 of the second set, here a doublet, is connected to the first optical fibre 24, acting as a backup optical fibre, through one single and different line 38, 40.

Each protected optical network unit 16 of the second set is connected to the second optical fibre 26, acting as a main optical fibre, through one single and different line 42, 44.

The optical line termination 20 and the router 12 are forming a central office also called Point of Presence.

The optical line termination 20 comprises a dedicated multiple point control unit per optical fibre able to manage the TDMA uplink transmission (from optical network units (ONUs) to optical line termination (OLT)).

As two optical fibres 24, 26 are shown in the figure 1, only two multiple point control units 45, 46 are shown.

The optical line termination 20 also comprises a first and a second dynamic transmission resources allocation units 47, 48, also called Dynamic Bandwidth Allocation units, respectively associated and connected to the first and second multiple point control units 45, 46.

The optical line termination 20 also comprises a protection monitoring and handover management unit 49 connected through a bidirectional link to each multiple point control unit 45, 46 and a high rate multiplexer 50 connected to each multiple point control unit 45, 46 as input and connected to the router 12 as output.

The first multiple point control unit 45 comprises a first TDMA uplink demodulator 51 followed by first de-multiplexer 52, the first demodulator 51 being connected to the first optical fibre 24 at the optical port 28.

The first multiple point control unit 45 also comprises a first bank of buffers 54, 56 based on a first FIFO (First In First Out) structure, each buffer 54, 56 corresponding to a specific optical network unit. A first set of buffers 54 correspond to the unprotected optical network units 14 while a second set of buffers 56 corresponds to the protected optical network units 16.

The first multiple point control unit 45 comprises a first TDMA multiplexer 58 connected to each buffer 54, 56 as input, the TDMA multiplexer 58 having an inhibition unit 60 able to either selectively mask data issued only from a determined subset of buffers among the buffers 56 associated to the protected optical network units 16 according to a first selection command containing subset configuration information or to mask the data of all the buffers 54, 56 according to a second selection command.

The first multiple point control unit 45 comprises a first controller unit 62 able to receive the status and to send commands from and to the set demultiplexer 52, the FIFO buffers 54, 56 of the first bank, the first TDMA multiplexer 58 including the inhibition unit 60, and each optical network unit 14, 16 connected to the first optical fibre 24, especially user access FIFO buffers of the optical network units 14, 16. Receiving status and sending commands are carried out through respective bidirectional links.

The second multiple point control unit 46 comprises a second TDMA uplink demodulator 63 followed by a second de-multiplexer 64, the second demodulator 63 being connected to the second optical fibre 26 at the optical port 30.

The second multiple point control unit 46 also comprises a second bank of buffers 66 based on a first FIFO (First In First Out) structure, each buffer 66 corresponding to a specific optical network unit. The second bank of buffers 66 correspond to the protected optical network units 16.

The second multiple point control unit 46 comprises a second TDMA multiplexer 68 connected to each buffer 66 as input, the TDMA multiplexer 68 having an inhibition unit 70 able to selectively mask data issued from a determined subset of buffers among the buffers 66 associated to the protected optical network units 16 according to a third command containing subset configuration information.

The second multiple point control unit 46 comprises a second controller unit 72 able to receive the status and to send command from and to the de-multiplexer 64, the FIFO buffers 66 of the second bank, the second TDMA multiplexer 68 including the second inhibition unit 70 through respective bidirectional links, and each optical network unit 16 connected to the second optical fibre 26.

Each unprotected optical network unit 14 comprises a transmission resource unit 80 with a user access FIFO buffer 81 able to receive from the first multiple point control unit 45 the current transmission resource allocated by the first dynamic transmission resources allocation unit 47 namely the number of data transmitted within the same slot of the first TDMA uplink.

Each user access FIFO buffer 81 is able to provide via signalling to the first multiple point control unit 45 its own status concerning the current volume of data to be transmitted that are currently stored before transmission in the TDMA slot.

Each protected optical network unit 16 comprises a duplication unit 90 able to duplicate data to be sent on the uplink into two different user access buffers 91, 93, to transmit from each buffer 91, 93 a different data flux on the two respective lines 38, 42 or 40, 44 according the connection to the top terminal or to the bottom terminal as shown in the figure 1.

Each user access FIFO buffer 91, 93 is able to provide via signalling to the respective first multiple point control unit 45 and the second multiple point control unit 46 its own status concerning respectively a first current volume of data and a second volume of data to be transmitted that are currently stored before transmission in the respective first TDMA uplink slot and second TDMA uplink slot.

The duplication unit 90 of each protected optical network unit 16 comprises a TDMA uplink resources unit 92 for the two TDMA uplinks able to receive from the first multiple point control unit 45 and the second multiple point control unit 46 the respective values of current transmission resources allocated by the first and the second dynamic transmission resources allocation units 47, 48 and to implement the received transmission resources values as transmission parameters during the TDMA uplink transmissions.

The duplication unit 90 of each protected optical network unit 16 also comprises a protection protocol management unit 94 able to exchange protection signalling with the protection monitoring and handover management unit 49 through the first and second multiple point control units 45, 46.

A bidirectional link 98 is provided between the two dynamic transmission resources allocation units 47, 48 equipped with suitable interfaces.

The two dynamic optical resources allocation units 47, 48 with the link 98 are therefore able to cooperate between each other and to elaborate an optimized allocation scheme of the transmission resources for the two TDMA uplinks by modifying transmission resources calculated previously and separately for each TDMA uplink. Thus, they are able to adjust the transmission resources of the two TDMA uplinks corresponding to a same protected optical network unit 16 by also taking into account the status of the two buffers of a protected optical network unit (16).

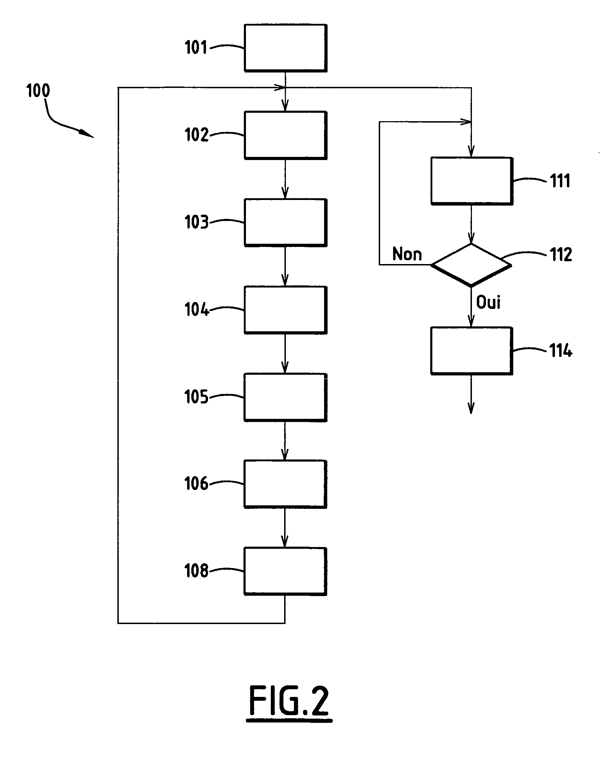

The figure 2 illustrates the operation of the PON concerning protection functionality.

During normal operation, while the two optical fibres 24, 26 are correctly working, traffic data issued from the unprotected network optical units 14 are flowing through the first optical fibre 24, processed by the first multiple point control unit 45 and multiplexed through the high rate multiplexer 50 with data issued from the second multiple point control unit 46 to be outputted to the high rate data network 10.

During normal operation, traffic data issued from the protected network optical units 16 are duplicated by respective duplication unit 90 into first and second data flows.

The first data flow is flowing through the first optical fibre 24, processed by the first multiple point control unit 45. The first data flow is buffered in the respective FIFO buffers 56 but inhibited during multiplexing phase in the first multiplexer 58 by a masking executed by the inhibition unit 60 which is enabled. The first data flow is therefore not transmitted by the high rate multiplexer 50 to the high rate data network.

The second data flow flowing through the second optical fibre 26, is processed by the second multiple point control unit 46. The second data flow is buffered in the respective FIFO buffers 66, not inhibited by the second inhibition unit 70 which is disabled during multiplexing in the second multiplexer 68. The second data flow is therefore transmitted by the high rate multiplexer 50 to the high rate data network 12, thus enabling correct transmission of the data issued from protected optical network units 16.

During normal operation, each first and second TDMA uplink access is controlled by the respective first and second multiple point control unit 45, 46.

The first uplink TDMA access comprises transmission resources allocated to both unprotected and protected network optical units 14, 16 which are connected to the first optical fibre 24.

The second uplink TDMA access comprises transmission resources allocated to the protected network optical units 16 only connected to the second optical fibre 26.

In a first step 101, the first and second multiple point control unit 45, 46 send to the optical network units the pertinent TDMA frame synchronization parameters depending on the respective round trip delays exhibited for each optical path from a network optical unit to a multiple point control unit.

In a following step 102, the first controller unit 62 receives respective status from each user access FIFO buffer 81, 93 representative of a volume of data to be transmitted on the first TDMA uplink from a respective optical network unit 14, 16 connected to the first optical fibre line 24. Then, it transmits these statuses to the first dynamic transmission resources allocation unit 47.

In the same step 102, the second controller unit 72 receives respective status from each user access FIFO buffer 91 representative of a volume of data to be transmitted on the second TDMA uplink from a respective protected optical network unit 16 connected to the second optical fibre 26. Then, it transmits this status to the second dynamic transmission resources allocation unit 48.

In a step 103, in a concurring time, the first and second dynamic transmission allocation units 47, 48 separately compute values of current transmission resources to be allocated to the optical network units 14, 16 by a separate optimization of the current first and the second TDMA uplink access schemes.

In a further step 104, the first and second dynamic transmission resources allocation units 47 and 48 exchange current transmission resources values that have been computed in step 103 through the signalling link 98 and modify in an allocation step 105 the current transmission resources allocation schemes computed in the step 103 by taking into account the constraint that the two modified transmission resources allocated for a same protected optical network unit 16 are very close to each other and must tend to be the same.

As a non limiting example, the allocation step 105 comprises the following steps for a same protected optical network unit:
- calculating a first assignment value as the minimal value among the first and the second current transmission resources,
- calculating a first current rest of the first buffer (91) as the difference between the first current volume of data and the first current transmission resource,
- calculating a second current rest of the second buffer (93) as the difference between the second current volume of data and the second current transmission resource,
- calculating a second assignment value as the difference between the first assignment value and the absolute value of the difference between the first and the second current rest, if the difference between the first assignment value and the absolute value is positive, otherwise calculating the second assignment value as equal to zero,
- determining the first modified transmission resource as the first assignment value if the first current rest is higher than the second current rest, otherwise determining the first assignment value as the second modified transmission resource,
- determining the second modified transmission resource as the second assignment value if the first assignment value has been determined as the first modified transmission resource, otherwise determining the second assignment value as the first modified transmission resource.

In a subsequent step 106, the first and second dynamic transmission resources allocation units 47 and 48 send their respective modified transmission resources allocation scheme for first and second TDMA uplink, namely a set of modified transmission resources allocated respectively to the first and second multiple point control units 45 and 46.

In a subsequent step 108, the first multiple point control unit 45 sends to the transmission resource unit 80 of each unprotected optical network unit 14 and to the transmission resource unit 92 of each protected optical network unit 16, the modified allocated transmission resources corresponding to the first TDMA uplink and determined by the first dynamic transmission resources allocation unit 47.

In the same step 108 and concurrently to sending by the first multiple point control unit 45, the second multiple point control unit 46 sends to the transmission resource unit 92 of each protected optical network unit 16, the modified allocated transmission resources corresponding to the second TDMA uplink determined by the second dynamic transmission resources allocation unit 48.

In the same step 108, the first and second multiple point control units 45, 46 send also a request to the optical network units 14, 16 for executing the transmissions with the updated allocated transmission resources.

The steps 102, 103, 104, 105, 106, 108 are repeated according to a first cycle having a first time period.

In parallel to the steps 102, 103, 104, 105, 106, 108 forming the first cycle, in a step 111, the protection monitoring and handover management unit 49 of the optical line termination 20 and protection protocol management unit 94 exchange a protection protocol signalling based on the exchange of two bytes referred as to K1, K2 and defined in the protocol standardised ITU. These bytes describe the current state of each protected optical network units 16 and optical line termination 20 and the actions to be taken in cases of default.

All the information about link quality and link availability are exchanged using the K1 and K2 bytes. In a variant, another protocol might be used.

In a further step 112, a test is carried out to determine whether a default occurs. For instance, a default occurs when the second optical fibre 26 is cut.

A default is detected because either data cannot be read or an error is detected. Some other mechanism may be used to detect a default.

If a default does not occur, the steps 111, 112 are repeated according to a second cycle with a second time period much lower than the first time period.

When a default occurs, the process proceeds to a step 114 wherein an action is taken to handover totally or partially the traffic data of the protected optical network units 16 from the second fibre 26 to the first optical fibre 24.

In this step 114, the inhibition unit 60 of the first multiplexer 58 is either totally disabled and all the data of the first TDMA uplink corresponding to the optical network units 16 can pass and can be multiplexed or partially disabled and the data of the first TDMA uplink corresponding to selected optical network units 16 can pass and can be multiplexed.

In the same step 114, the second inhibition unit 70 of the second multiplexer 68 is accordingly either totally enabled by masking all the data of the second TDMA uplink or partially enabled by selectively masking the data of the second TDMA uplink.

Since the transmission resources are almost the same at the outputs of the respective 56 and 66, the loss of packets during the handover is minimized even avoided.

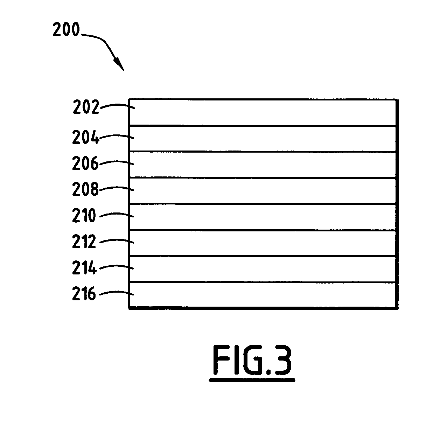

In figure 3, an implementation of the protection protocol is illustrated. The two protection bytes as defined in ITU , K1 and K2 are carried inside a Multi Point Medium Access layer as defined in IEEE 802.3ah standard. A new type of frame 200 is created according to the IEEE 802.3ah standard known also as Ethernet and illustrated in figure 3.

This Ethernet frame 200 carrying the two bytes K1 and K2 comprises eight field defined as follows:
- a 6 bytes first field 202 containing Destination Address information,
- a 6 bytes second field 204 containing Source Address information,
- a 2 bytes third field 206 containing Length/Type information, here 8808 since a Mac Control frame is used,
- a 2 bytes fourth field 208 containing a new Opcode (Operational Code) information,
- a one byte fifth field 210 containing K1 byte information,
- a one byte sixth field 212 containing K2 byte information,
- a 42 bytes seventh field 214 containing Padding information,
- a 4 bytes eighth field 216 containing FCS information.

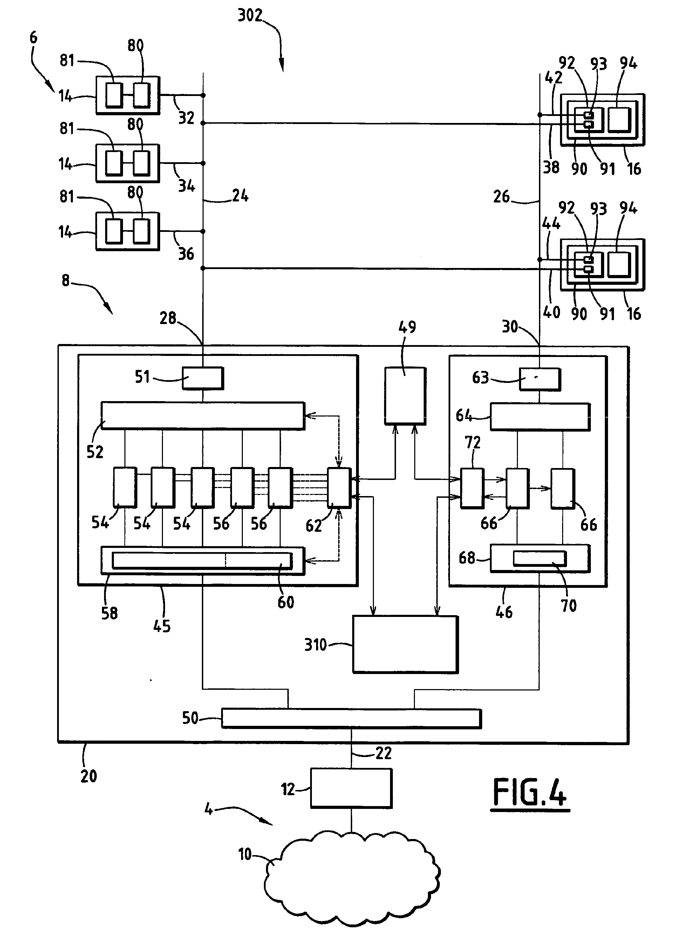

The passive optical network 302 illustrated in figure 4 is a first variant of the embodiment described in figure 1, wherein the first and second dynamic transmission resources allocation units 47 and 48 linked between each other by the link 98 have been integrated into a single transmission resource allocation unit 310.

Beside the usual integration effects as diminution of size and power consumption, such architecture also facilitates development of more efficient allocation algorithms.

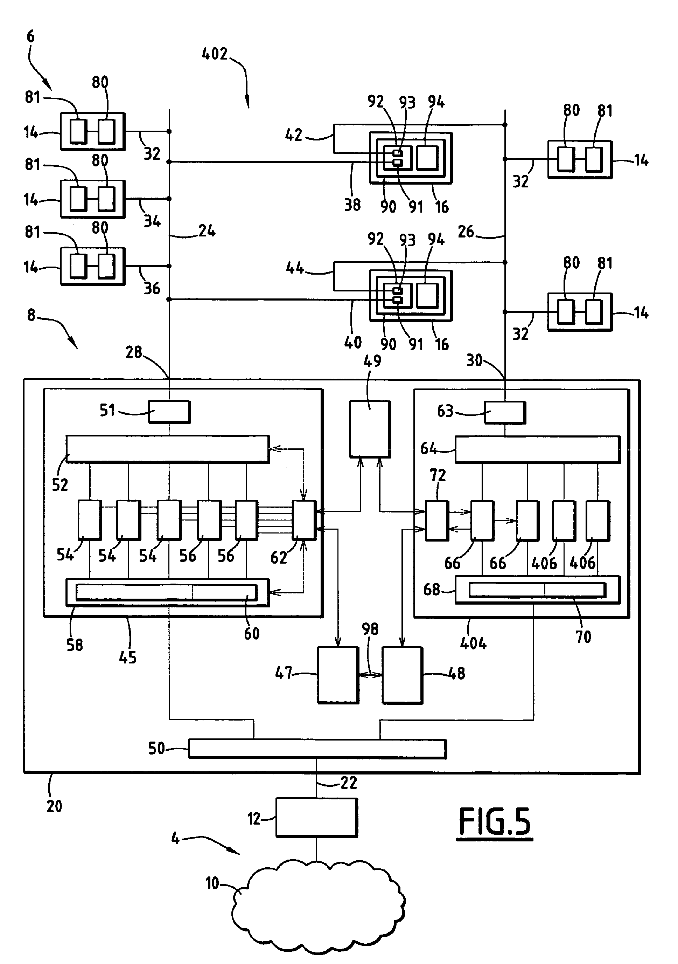

The passive optical network 402 illustrated in figure 5 is a second variant of the embodiment described in figure 1, wherein a third set of unprotected terminal 14 has been added and connected to the second optical fibre 26 that was only dedicated to protected optical network units in figure 1.

In figure 5, the inhibition unit 70 is of the same type inhibition unit 60. The inhibition unit 70 is able to either selectively mask data issued only from the buffers a determined subset of buffers among the buffers 66 associated to the protected optical network units 16 according to a first selection command containing subset configuration information or to mask the data of all the buffers 66, 406 according to a second selection command.

The architecture of the second multipoint control unit 46 of figure 1 has been slightly modified by adding in the second multipoint control unit 404 two FIFO buffers 406 corresponding to the third set of unprotected optical network units 14.

By splitting the unprotected users, preferably equally, between the first optical fibre 24 and the second optical fibre 26 and taking into account the fact that statistically traffic features are similar between the optical network units, even if decisions of transmission resources allocation are not coordinated, namely the transmission resources allocated taken by the dynamic transmission resources allocation units 47, 48 are different over the two optical paths, the difference between transmission resources for a same protected optical network unit 16 will be smaller than the difference exhibited in the case all the unprotected units are connected to the same optical fibre.

Advantageously, when one fibre is cut, only a part preferably a half of the unprotected network units 14 will be affected while protected units will continue to permanently access to the service.

Advantageously, in the case the link 98 is damaged, the quality of service and availability for the protected units will remain satisfactory.

## Claims

1. Passive optical network (PON) with enhanced protection comprising an optical line termination (20) connected respectively to a first and a second optical fibre (24, 26), a first set of unprotected optical network units (14) connected to the optical line termination (20) through only the first optical fibre (24) and a second set of protected optical network units (16) connected to the optical line termination (20) through both the first and second optical fibres (24, 26),
the optical line termination (20) having a first and a second dynamic transmission resources allocation units (47, 48) able to respectively and separately compute and allocate transmission resources for a first TDMA uplink access to be used by the corresponding optical network units (14, 16) connected to the first fibre (24) and for a second TDMA uplink access to be used by the corresponding optical network units (16) connected to the second optical fibre (26),
each unprotected optical network unit (14) of the first set being able to transmit timely in the first TDMA uplink user data according to a specific current first transmission resource prescribed by the first dynamic transmission resources allocation unit (47) and able to send a current status of a user access buffer (81) representative of a volume of data to be transmitted on the first TDMA uplink by the each unprotected optical network unit (14) to the first dynamic transmission resources allocation unit (47),
**characterized in that**
each protected optical network unit (16) of the second set having a duplication data unit (90) with two different user access buffers (91, 93) able to transmit timely and respectively in the first and the second TDMA uplink access the same user data according to a first current transmission resource and a second current transmission resource as respectively prescribed by the first and the second dynamic transmission resources allocation unit (47, 48), and able to send current statuses of the user access buffers (91, 93) representative of a first current volume of data and a second current volume of data to be transmitted respectively on the first TDMA uplink and the second TDMA uplink by the each protected optical network unit (16) respectively to the first and second dynamic transmission resources allocation unit (47, 48),
the optical line termination (20) comprises a link (98) between the first and the second dynamic transmission resources allocation units (47, 48) for exchanging separately computed values of first and second transmission resources to be allocated to the protected optical network units (16) of the second set in order to align the computed first and second transmission resources corresponding to a same protected optical network unit (16) by taking into account the current statuses of the user access buffers (91, 93).

2. Passive optical network with enhanced protection according to the claim 1, **characterized in that** the first and the second dynamic transmission resources allocation units (47, 48) are a single and a same unit (310).

3. Passive optical network (PON) with enhanced protection according to any of the claims 1 to 2, **characterized in that** it comprises a third set of unprotected optical network units (14) connected to the optical line termination (10) through only the second optical fibre (26).

4. Passive optical network with enhanced protection according to any of the claims 1 to 3, **characterized in that**
the optical line termination (20) comprises a first and a second multipoint control unit (45, 46) respectively connected to the first and second optical fibre (24, 26) and able to manage the respective TDMA uplink access corresponding to the first and second optical fibre (24, 26), and **in that**
the first and second multipoint control units (45, 46) are respectively connected to the first and the second dynamic transmission resources allocation units (47, 48) and able to exchange signalling regarding current transmission resources and current status of the buffers (91, 93) for protected optical network units (16) corresponding to the first and second TDMA uplink access and commands to align the first and second transmission resources for a same protected optical network unit (16) corresponding to the first and second TDMA access.

5. Passive optical network with enhanced protection according to any of the claims 1 to 4, **characterized in that** the first and second multipoint control unit (45, 46) comprises respectively a first and a second de-multiplexer (52, 64), a first and a second bank of FIFO buffers (54, 56; 66) respectively connected to the de-multiplexers (52, 64) and a first and a second multiplexing unit (58, 68) respectively connected to outputs of the first and second bank of FIFO buffers (54, 56; 66).

6. Passive optical network with enhanced protection according to the claim 5, **characterized in that** the each multiplexing unit (58, 68) comprises an inhibition unit (60, 70) able to selectively mask data corresponding to data of a subset of optical network units among the protected optical network units (16).

7. Passive optical network with enhanced protection according to any of the claims 1 to 6, **characterized in that** the optical line termination (20) comprises a high rate multiplexing unit (50) with two inputs connected respectively to upstream outputs of the first and second multipoint control units (45, 46).

8. Passive optical network with enhanced protection according to any of the claims 1 to 7, **characterized in that**
the optical line termination (20) comprises a protection monitoring and handover management unit (49) able to control the inhibition units (60, 70),
the protected optical network units (16) comprises a protection protocol management unit (94) able to exchange protection signalling with the protection monitoring and handover management unit (49) through the first and second optical fibres (24,26).

9. Passive optical network with enhanced protection according to claim 8, wherein the signalling comprising exchange of two bytes PST type messages, K1 and K2 as defined in the ITU standard G 841 and G 983.5.

10. Passive optical network with enhanced protection according to claim 9, **characterized in that**
the K1 and K2 bytes are carried inside the Multi Point Mac layer as defined in IEEE 802.3ah into a specific Ethernet frame (200) to carry these bytes, and **in that** the specific frame (200) comprises a 6 bytes first field (202) containing Destination Address information, a 6 bytes second field (204) containing Source Address information, a 2 bytes third field (206) containing a new Length/Type information, a 2 bytes fourth field (208) containing Opcode information, a one byte fifth field (210) containing K1 byte information, a one byte sixth field (212) containing K2 byte information, a 42 bytes seventh field (214) containing Padding information, a 4 bytes eighth field (216) containing FCS information.

11. Method of protection in a Passive Optical Network comprising an optical line termination (20) connected respectively to a first and a second optical fibre (24, 26), a first set of optical network units (14) connected to the optical line termination (20) through only the first optical fibre (24) and a second set of protected optical network units (16) connected to the optical line termination (20) through both the first and second optical fibres (24, 26),
the optical line termination (20) having a first and a second dynamic transmission resources allocation unit (47, 48) able to respectively and separately allocate transmission resources for a first TDMA uplink access to be used by the corresponding optical network units (14, 16) connected to the first fibre (24) and for a second TDMA uplink access to be used by the corresponding optical network units (16) connected to the second optical fibre (26),
each unprotected optical network unit (14) of the first set being able to transmit timely in the first TDMA uplink user data according to a specific current first transmission resource prescribed by the first dynamic transmission resources allocation unit (47) and able to send a current status of a user access buffer (81) representative of a volume of data to be transmitted on the first TDMA uplink by the each un protected optical network unit (14) to the first dynamic transmission resources allocation unit (47),
each protected optical network unit (16) of the second set having a duplication data unit (90) with two different user access buffers able to transmit timely and respectively in the first and the second TDMA uplink access the same user data according to a first current transmission resource and a second current transmission resource as respectively prescribed by the first and the second dynamic transmission resources allocation unit (47, 48), and able to send current statuses of the two user access buffers (91, 93) representative of a first current volume of data and a second current volume of data to be transmitted respectively on the first TDMA uplink and the second TDMA uplink by the each protected optical network unit (16) respectively to the first and second dynamic transmission resources allocation unit (47, 48),
the optical line termination (20) comprising a link (98) between the first and the second dynamic transmission resources allocation units (47, 48),
**characterized in that** it comprises the following steps consisting of:
receiving (102) respectively current status of each user access buffer (81, 91) and current status for each user access buffer (93) by respective first and second dynamic transmission resources allocation unit (47, 48),
computing (103) values of current transmission resources to be allocated to the optical network units (14, 16),
exchanging (104) between the first and the second dynamic transmission resources allocation units (47, 48), the current respective transmission resources values computed in step (103) through the link (98),
allocating (105) a modified first and a modified second transmission resource to a same protected optical network unit (16) depending on current first and second transmission resources and current statuses of buffers (91, 93) so that modified transmission resources of the same protected optical network (16) are very close to each other and tend to be the same.

12. Method of protection in a Passive Optical Network according to claim 11, **characterized in that** the allocating step (105) for a same protected optical network unit (16) comprises the following steps:
- calculating a first assignment value as the minimal value among the first and the second current transmission resources,
- calculating a first current rest of the first buffer (91) as the difference between the first current volume of data and the first current transmission resource,
- calculating a second current rest of the second buffer (93) as the difference between the second current volume of data and the second current transmission resource,
- calculating a second assignment value as the difference between the first assignment value and the absolute value of the difference between the first and the second current rest, if the difference between the first assignment value and the absolute value is positive, otherwise calculating the second assignment value as equal to zero,
- determining the first modified transmission resource as the first assignment value if the first current rest is higher than the second current rest, otherwise determining the first assignment value as the second modified transmission resource,
- determining the second modified transmission resource as the second assignment value if the first assignment value has been determined as the first modified transmission resource, otherwise determining the second assignment value as the first modified transmission resource.

13. Method of protection according to any of the claims 11 to 12, **characterized in that** it comprises a step consisting of:
when a default is detected, executing handover (114) by switching partly or totally the traffic data flow from the second optical fibre (26) to the first optical fibre (24) through enabling a second inhibition unit (70) for data received from the second optical fibre (26) and disabling a first inhibition unit (60) for data received from the first optical fibre (24),
disabling the inhibition unit (60) of the first multiplexer (58) is either total and all the data of the first TDMA uplink corresponding to the optical network units (16) can pass and can be multiplexed or partial and the data of the first TDMA uplink corresponding to selected optical network units (16) can pass and can be multiplexed.
enabling the second inhibition unit (70) of the second multiplexer (68) in respect to disabling the inhibition unit (60) is either total by masking all the data of the second TDMA uplink or partial by selectively masking the data of the second TDMA uplink.

14. Method of protection according to any of the claims 11 to 13, **characterized in that** it comprises steps consisting of:
exchanging (111) protection management data, and.
testing (112) whether a default occurs.

15. Method of protection according to claim 14, wherein protection management data are defined in the ITU standard G 841 and G 983.5.

## Patentansprüche

1. Passives optisches Netzwerk (PON) mit verbessertem Schutz, wobei das Netzwerk folgendes aufweist:
- einen optischen Leitungsabschluß (20), der mit einem ersten bzw. einem zweiten Lichtleiter (24, 26) verbunden ist,
- einen ersten Satz nicht geschützter optischer Netzwerkeinheiten (14), die nur über den ersten Lichtleiter (24) mit dem optischen Leitungsabschluß (20) verbunden sind, und
- einen zweiten Satz geschützter optischer Netzwerkeinheiten (16), die sowohl über den ersten als auch über den zweiten Lichtleiter (24, 26) mit dem optischen Leitungsabschluß (20) verbunden sind,
- wobei der optische Leitungsabschluß (20) eine erste und eine zweite dynamische Zuweisungseinheit (47, 48) für Übertragungsressourcen aufweist, die jeweils in der Lage sind, Übertragungsressourcen separat zu berechnen und zuzuweisen für einen ersten TDMA-Aufwärts-Zugriff für die Verwendung durch die entsprechenden, mit dem ersten Lichtleiter (24) verbundenen optischen Netzwerkeinheiten (14, 16), sowie für einen zweiten TDMA-Aufwärts-Zugriff für die Verwendung durch die entsprechenden, mit dem zweiten Lichtleiter (26) verbundenen optischen Netzwerkeinheiten (16),
- wobei jede nicht geschützte optische Netzwerkeinheit (14) des ersten Satzes in der Lage ist, in der ersten TDMA-Aufwärtsverbindung Benutzerdaten gemäß einer speziellen aktuellen ersten Übertragungsressource, die von der ersten dynamischen Zuweisungseinheit (47) für Übertragungsressourcen vorgeschrieben ist, rechtzeitig zu übertragen, sowie in der Lage ist, einen aktuellen Status eines Benutzer-Zugriffspuffers (81), der für ein auf der ersten TDMA-Aufwärtsverbindung von jeder nicht geschützten optischen Netzwerkeinheit (14) zu übertragendes Datenvolumen repräsentativ ist, zu der ersten dynamischen Zuweisungseinheit (47) für Übertragungsressourcen zu senden,
**dadurch gekennzeichnet,**
**daß** jede geschützte optische Netzwerkeinheit (16) des zweiten Satzes eine Datenverdoppelungseinheit (90) mit zwei verschiedenen Benutzer-Zugriffspuffern (91, 93) aufweist, die in der Lage sind, bei dem ersten bzw. dem zweiten TDMA-Aufwärts-Zugriff die gleichen Benutzerdaten gemäß einer ersten aktuellen Übertragungsressource und einer zweiten aktuellen Übertragungsressource rechtzeitig zu übertragen, wie diese von der ersten bzw. der zweiten dynamischen Zuweisungseinheit (47, 48) für Übertragungsressourcen vorgeschrieben sind, sowie in der Lage sind, aktuelle Statuszustände der Benutzer-Zugriffspuffer (91, 93), die für ein erstes aktuelles Datenvolumen bzw. ein zweites aktuelles Datenvolumen repräsentativ sind, die von jedem geschützten optischen Netzwerk (16) auf der ersten TDMA-Aufwärtsverbindung bzw. der zweiten TDMA-Aufwärtsverbindung zu übertragen sind, zu der ersten bzw. der zweiten dynamischen Zuweisungseinheit (47, 48) für Übertragungsressourcen zu senden,
- wobei der optische Leitungsabschluß (20) ein Verbindungsglied (98) zwischen der ersten und der zweiten dynamischen Zuweisungseinheit (47, 48) für Übertragungsressourcen aufweist, um separat berechnete Werte der ersten und der zweiten Übertragungsressource auszutauschen, die den geschützten optischen Netzwerkeinheiten (16) des zweiten Satzes zuzuweisen sind, um die berechneten ersten und zweiten Übertragungsressourcen, die einer gleichen geschützten optischen Netzwerkeinheit (16) entsprechen, unter Berücksichtigung der aktuellen Statuszustände der Benutzer-Zugriffspuffer (91, 93) auszurichten.

2. Passives optisches Netzwerk mit verbessertem Schutz nach Anspruch 1, **dadurch gekennzeichnet,**
**daß** es sich bei der ersten und der zweiten dynamischen Zuweisungseinheit (47, 48) für Übertragungsressourcen um eine einzige und dieselbe Einheit (310) handelt.

3. Passives optisches Netzwerk (PON) mit verbessertem Schutz nach einem der Ansprüche 1 bis 2,
**dadurch gekennzeichnet,**
**daß** es einen dritten Satz von nicht geschützten optischen Netzwerkeinheiten (14) aufweist, die nur über den zweiten Lichtleiter (26) mit dem optischen Leitungsabschluß (10) verbunden sind.

4. Passives optisches Netzwerk mit verbessertem Schutz nach einem der Ansprüche 1 bis 3,
**dadurch gekennzeichnet,**
**daß** der optische Leitungsabschluß (20) eine erste und eine zweite Mehrpunkt-Steuereinheit (45, 46) aufweist, die mit dem ersten bzw. dem zweiten Lichtleiter (24, 26) verbunden sind und in der Lage sind, den jeweiligen TDMA-Aufwärts-Zugriff, der dem ersten bzw. dem zweiten Lichtleiter (24, 26) entspricht, zu verwalten, und
**daß** die erste und die zweite Mehrpunkt-Steuereinheit (45, 46) mit der ersten bzw. der zweiten dynamischen Zuweisungseinheit (47, 48) für Übertragungsressourcen verbunden sind und in der Lage sind, Signalisierungsinformation auszutauschen hinsichtlich der aktuellen Übertragungsressourcen und des aktuellen Status der Puffer (91, 93) für geschützte optischen Netzwerkeinheiten (16), die dem ersten und dem zweiten TDMA-Aufwärts-Zugriff entsprechen, sowie Befehle auszutauschen, um die ersten und zweiten Übertragungsressourcen für dieselbe geschützte optische Netzwerkeinheit (16) auszurichten, die dem ersten und dem zweiten TDMA-Zugriff entspricht.

5. Passives optisches Netzwerk mit verbessertem Schutz nach einem der Ansprüche 1 bis 4,
**dadurch gekennzeichnet,**
**daß** die erste und die zweite Mehrpunkt-Steuereinheit (45, 46) einen ersten bzw. einen zweiten Demultiplexer (52, 64), eine erste bzw. eine zweite Reihe von FIFO-Puffern (54, 56; 66), die jeweils mit den Demultiplexern (52, 64) verbunden sind, sowie eine erste bzw. eine zweite Multiplex-Einheit (58, 68) aufweisen, die mit Ausgängen der ersten bzw. der zweiten Reihe von FIFO-Puffern (54, 56; 66) verbunden sind.

6. Passives optisches Netzwerk mit verbessertem Schutz nach Anspruch 5, **dadurch gekennzeichnet,**
**daß** jede Multiplex-Einheit (58, 68) eine Unterdrückungseinheit (60, 70) aufweist, die in den Lage ist, Daten selektiv zu maskieren, die Daten eines Teilsatzes von optischen Netzwerkeinheiten unter den geschützten optischen Netzwerkeinheiten (16) entsprechen.

7. Passives optisches Netzwerk mit verbessertem Schutz nach einem der Ansprüche 1 bis 6,
**dadurch gekennzeichnet,**
**daß** der optische Leitungsabschluß (20) eine Multiplex-Einheit (50) mit hoher Rate aufweist, die zwei Eingänge besitzt, die jeweils mit vorgeschalteten Ausgängen der ersten und der zweiten Mehrpunkt-Steuereinheit (45, 46) verbunden sind.

8. Passives optisches Netzwerk mit verbessertem Schutz nach einem der Ansprüche 1 bis 7,
**dadurch gekennzeichnet,**
**daß** der optische Leitungsabschluß (20) eine Schutzüberwachungs- und Übergabeverwaltungseinheit (49) aufweist, die in der Lage ist, die Unterdrückungseinheiten (60, 70) zu steuern,
**daß** die geschützten optischen Netzwerkeinheiten (16) eine Schutzprotokoll-Verwaltungseinheit (94) aufweisen, die in der Lage ist, Schutz-Signalinformation mit der Schutzüberwachungs- und Übergabeverwaltungseinheit (49) über den ersten und den zweiten Lichtleiter (24,26) auszutauschen.

9. Passives optisches Netzwerk mit verbessertem Schutz nach Anspruch 8, wobei der Signalinformationsaustausch das Austauschen von PST-Nachrichten mit 2 Bytes, K1 und K 2, gemäß der Definition in dem ITU-Standard G 841 und G 983.5 beinhaltet.

10. Passives optisches Netzwerk mit verbessertem Schutz nach Anspruch 9, **dadurch gekennzeichnet,**
**daß** die Bytes K1 und K2 innerhalb der Mehrpunkt-Mac-Schicht gemäß der Definition in IEEE 802.3ah in einen speziellen Ethernet-Rahmen (200) zum Befördern dieser Bytes befördert werden,
und **daß** der spezielle Rahmen (200) ein erstes Feld (202) mit 6 Bytes, das Bestimmungsadressen-Information enthält, ein zweites Feld (204) mit 6 Bytes, das Quelladressen-Information enthält, ein drittes Feld (206) mit 2 Bytes, das Information über eine neue Länge/einen neuen Typ enthält, ein viertes Feld (208) mit 2 Bytes, das Opcode-Information enthält, ein fünftes Feld (210) mit einem Byte, das K1-Byte-Information enthält, ein sechstes Feld (212) mit einem Byte, das K2-Byte-Information enthält, ein siebtes Feld (214) mit 42 Bytes, das Füllinformation enthält, sowie ein achtes Feld (216) mit 4 Bytes aufweist, das FCS-Information enthält.

11. Schutzverfahren in einem passiven optischen Netzwerk,
das folgendes aufweist:
einen optischen Leitungsabschluß (20), der mit einem ersten bzw. einem zweiten Lichtleiter (24, 26) verbunden ist, einen ersten Satz optischer Netzwerkeinheiten (14), die nur über den ersten Lichtleiter (24) mit dem optischen Leitungsabschluß (20) verbunden sind, und einen zweiten Satz geschützter optischer Netzwerkeinheiten (16), die sowohl über den ersten als auch über den zweiten Lichtleiter (24, 26) mit dem optischen Leitungsabschluß (20) verbunden sind,
- wobei der optische Leitungsabschluß (20) eine erste und eine zweite dynamische Zuweisungseinheit (47, 48) für Übertragungsressourcen aufweist, die jeweils in der Lage sind, Übertragungsressourcen separat zuzuweisen für einen ersten TDMA-Aufwärts-Zugriff für die Verwendung durch die entsprechenden, mit dem ersten Lichtleiter (24) verbundenen optischen Netzwerkeinheiten (14, 16), sowie für einen zweiten TDMA-Aufwärts-Zugriff für die Verwendung durch die entsprechenden, mit dem zweiten Lichtleiter (26) verbundenen optischen Netzwerkeinheiten (16),
- wobei jede nicht geschützte optische Netzwerkeinheit (14) des ersten Satzes in der Lage ist, in der ersten TDMA-Aufwärtsverbindung Benutzerdaten gemäß einer speziellen aktuellen ersten Übertragungsressource, die von der ersten dynamischen Zuweisungseinheit (47) für Übertragungsressourcen vorgeschrieben wird, rechtzeitig zu übertragen, sowie in der Lage ist, einen aktuellen Status eines Benutzer-Zugriffspuffers (81), der für ein auf der ersten TDMA-Aufwärtsverbindung von jeder nicht geschützten optischen Netzwerkeinheit (14) zu übertragendes Datenvolumen repräsentativ ist, zu der ersten dynamischen Zuweisungseinheit (47) für Übertragungsressourcen zu senden,
- wobei jede geschützte optische Netzwerkeinheit (16) des zweiten Satzes eine Datenverdoppelungseinheit (90) mit zwei verschiedenen Benutzer-Zugriffspuffern aufweist, die in der Lage sind, bei dem ersten bzw. dem zweiten TDMA-Aufwärts-Zugriff die gleichen Benutzerdaten gemäß einer ersten aktuellen Übertragungsressource und einer zweiten aktuellen Übertragungsressource rechtzeitig zu übertragen, wie diese von der ersten bzw. der zweiten dynamischen Zuweisungseinheit (47, 48) für Übertragungsressourcen vorgeschrieben werden, sowie in der Lage sind, aktuelle Statuszustände der beiden Benutzer-Zugriffspuffer (91, 93), die für ein erstes aktuelles Datenvolumen bzw. ein zweites aktuelles Datenvolumen repräsentativ sind, die von jeder geschützten optischen Netzwerkeinheit (16) auf der ersten TDMA-Aufwärtsverbindung bzw. der zweiten TDMA-Aufwärtsverbindung zu übertragen sind, zu der ersten bzw. der zweiten dynamischen Zuweisungseinheit (47, 48) für Übertragungsressourcen zu senden,
- wobei der optische Leitungsabschluß (20) ein Verbindungsglied (98) zwischen der ersten und der zweiten dynamischen Zuweisungseinheit (47, 48) für Übertragungsressourcen aufweist,
**dadurch gekennzeichnet,**
**daß** das Verfahren folgende Schritte aufweist:
- Empfangen (102) des jeweiligen aktuellen Status von jedem Benutzer-Zugriffspuffer (81, 91) und des aktuellen Status für jeden Benutzer-Zugriffspuffer (93) durch die erste bzw. zweite dynamische Zuweisungseinheit (47, 48) für Übertragungsressourcen,
- Berechnen (103) von Werten von aktuellen Übertragungsressourcen, die den optischen Netzwerkeinheiten (14, 16) zuzuweisen sind,
- Austauschen (104) der aktuellen jeweiligen Übertragungsressourcen, die in dem Schritt (103) berechnet worden sind, durch das Verbindungsglied (98) zwischen der ersten und der zweiten Zuweisungseinheit (47, 48) für Übertragungsressourcen,
- Zuweisen (105) einer modifizierten ersten und einer modifizierten zweiten Übertragungsressource zu derselben optischen Netzwerkeinheit (16) in Abhängigkeit von den aktuellen ersten und zweiten Übertragungsressourcen und den aktuellen Statuszuständen der Puffer (91, 93), so daß modifizierte Übertragungsressourcen desselben geschützten optischen Netzwerks (16) sehr nahe beieinander liegen und tendenziell gleich sind.

12. Schutzverfahren in einem passiven optischen Netzwerk nach Anspruch 11, **dadurch gekennzeichnet,**
**daß** der Zuweisungsschritt (105) für dasselbe geschützte optische Netzwerkeinheit (16) folgende Schritte aufweist:
- Berechnen eines ersten Zuordnungswerts als minimalen Wert unter der ersten und der zweiten aktuellen Übertragungsressource,
- Berechnen eines ersten aktuellen Rests des ersten Puffers (91) als Differenz zwischen dem ersten aktuellen Datenvolumen und der ersten aktuellen Übertragungsressource,
- Berechnen eines zweiten aktuellen Rests des zweiten Puffers (93) als Differenz zwischen dem zweiten aktuellen Datenvolumen und der zweiten aktuellen Übertragungsressource,
- Berechnen eines zweiten Zuordnungswerts als Differenz zwischen dem ersten Zuordnungswert und dem Absolutwert der Differenz zwischen dem ersten und dem zweiten aktuellen Rest, wenn die Differenz zwischen dem ersten Zuordnungswert und dem Absolutwert positiv ist, und anderenfalls Berechnen des zweiten Zuordnungswerts als gleich Null,
- Bestimmen der ersten modifizierten Übertragungsressource als ersten Zuordnungswert, wenn der erste aktuelle Rest höher ist als der zweite aktuelle Rest, anderenfalls Bestimmen des ersten Zuordnungswerts als zweite modifizierte Übertragungsressource,
- Bestimmen der zweiten modifizierten Übertragungsressource als zweiten Zuordnungswert, wenn der erste Zuordnungswert als erste modifizierte Übertragungsressource bestimmt worden ist, und anderenfalls Bestimmen des zweiten Zuordnungswerts als erste modifizierte Übertragungsressource.

13. Schutzverfahren bei einem passiven optischen Netzwerk nach einem der Ansprüche 11 bis 12,
**dadurch gekennzeichnet,**
**daß** das Verfahren folgenden Schritt aufweist:
- beim Feststellen eines Defekts erfolgt ein Ausführen einer Übergabe (114) durch teilweises oder vollständiges Umschalten des Verkehrsdatenflusses von dem zweiten Lichtleiter (26) auf den ersten Lichtleiter (24) durch Aktivieren einer zweiten Unterdrückungseinheit (70) für von dem zweiten Lichtleiter (24) empfangene Daten und Deaktivieren einer ersten Unterdrückungseinheit (60) für von dem ersten Lichtleiter (24) empfangene Daten,
- wobei das Deaktivieren der Unterdrückungseinheit (60) des ersten Multiplexers (58) entweder vollständig erfolgt und alle Daten der ersten TDMA-Aufwärtsverbindung, die den optischen Netzwerkeinheiten (16) entsprechen, passieren können oder gemultiplext werden können, oder partiell erfolgt und die Daten der ersten TDMA-Aufwärtsverbindung, die ausgewählten optischen Netzwerkeinheiten (16) entsprechen, passieren können und gemultiplext werden können,
- wobei das Aktivieren der zweiten Unterdrückungseinheit (70) des zweiten Multiplexers (68) in bezug auf die Deaktivierung der Unterdrückungseinheit (60) entweder vollständig erfolgt, indem alle Daten der zweiten TDMA-Aufwärtsverbindung maskiert werden, oder partiell erfolgt, indem die Daten der zweiten TDMA-Aufwärtsverbindung selektiv maskiert werden.

14. Schutzverfahren nach einem der Ansprüche 11 bis 13,
**dadurch gekennzeichnet,**
**daß** es folgende Schritte aufweist:
- Austauschen (111) von Schutzmanagementdaten; und
- Testen (112), ob ein Defekt vorliegt.

15. Schutzverfahren nach Anspruch 14,
wobei Schutzmanagementdaten in dem ITU-Standard G 841 and G 983.5 definiert sind.

## Revendications

1. Réseau optique passif (PON) avec protection améliorée comprenant une terminaison de ligne optique (20) connectée respectivement à des première et deuxième fibres optiques (24, 26), un premier ensemble d'unités de réseau optique non protégées (14) connectées à la terminaison de ligne optique (20) à travers uniquement la première fibre optique (24) et un deuxième ensemble d'unités de réseau optique protégées (16) connectées à la terminaison de ligne optique (20) à travers les première et deuxième fibres optiques (24, 26),
la terminaison de ligne optique (20) ayant des première et deuxième unités d'allocation de ressources de transmission dynamique (47, 48) aptes à respectivement et séparément calculer et allouer des ressources de transmission pour un premier accès de liaison montante TDMA à utiliser par les unités de réseau optique correspondantes (14, 16) connectées à la première fibre (24) et pour un deuxième accès de liaison montante TDMA à utiliser par les unités de réseau optique correspondantes (16) connectées à la deuxième fibre optique (26),
chaque unité de réseau optique non protégée (14) du premier ensemble étant apte à transmettre sans délai dans la première liaison montante TDMA des données d'utilisateur en fonction d'une première ressource de transmission actuelle spécifique prescrite par la première unité d'allocation de ressources de transmission dynamique (47) et apte à envoyer un statut actuel d'un tampon d'accès d'utilisateur (81) représentatif d'un volume de données à transmettre sur la première liaison montante TDMA par chaque unité de réseau optique non protégée (14) à la première unité d'allocation de ressources de transmission dynamique (47),
**caractérisé en ce que**
chaque unité de réseau optique protégée (16) du deuxième ensemble ayant une unité de données de duplication (90) avec deux tampons d'accès d'utilisateur différents (91, 93) apte à transmettre sans délai et respectivement dans les premier et deuxième accès de liaison montante TDMA les mêmes données d'utilisateur en fonction d'une première ressource de transmission actuelle et d'une deuxième ressource de transmission actuelle respectivement prescrites par les première et deuxième unités d'allocation de ressources de transmission dynamique (47, 48), et apte à envoyer des statuts actuels des tampons d'accès d'utilisateur (91, 93) représentatifs d'un premier volume actuel de données et d'un deuxième volume actuel de données à transmettre respectivement sur la première liaison montante TDMA et sur la deuxième liaison montante TDMA par chaque unité de réseau optique protégée (16) respectivement aux première et deuxième unités d'allocation de ressources de transmission dynamique (47, 48),
la terminaison de ligne optique (20) comprend une liaison (98) entre les première et deuxième unités d'allocation de ressources de transmission dynamique (47, 48) pour échanger séparément des valeurs calculées des première et deuxième ressources de transmission à allouer aux unités de réseau optique protégées (16) du deuxième ensemble pour aligner les première et deuxième ressources de transmission calculées correspondant à une même unité de réseau optique protégée (16) en tenant compte des statuts actuels des tampons d'accès d'utilisateur (91, 93).

2. Réseau optique passif avec protection améliorée selon la revendication 1, **caractérisé en ce que** les première et deuxième unités d'allocation de ressources de transmission dynamique (47, 48) sont une seule et même unité (310).

3. Réseau optique passif (PON) avec protection améliorée selon l'une quelconque des revendications 1 à 2, **caractérisé en ce qu'**il comprend un troisième ensemble d'unités de réseau optique non protégées (14) connectées à la terminaison de ligne optique (10) à travers uniquement la deuxième fibre optique (26).

4. Réseau optique passif avec protection améliorée selon l'une quelconque des revendications 1 à 3, **caractérisé en ce que**
la terminaison de ligne optique (20) comprend des première et deuxième unités de commande multipoint (45, 46) respectivement connectées aux première et deuxième fibres optiques (24, 26) et aptes à gérer l'accès de liaison montante TDMA respectif correspondant aux première et deuxième fibres optiques (24, 26), et **en ce que**
les première et deuxième unités de commande multipoint (45, 46) sont respectivement connectées aux première et deuxième unités d'allocation de ressources de transmission dynamique (47, 48) et aptes à échanger une signalisation relative aux ressources de transmission actuelles et un statut actuel des tampons (91, 93) pour les unités de réseau optique protégées (16) correspondant aux premier et deuxième accès de liaison montante TDMA et des commandes pour aligner les première et deuxième ressources de transmission pour une même unité de réseau optique protégée (16) correspondant aux premier et deuxième accès TDMA.

5. Réseau optique passif avec protection améliorée selon l'une quelconque des revendications 1 à 4, **caractérisé en ce que** les première et deuxième unités de commande multipoint (45, 46) comprennent respectivement des premier et deuxième démultiplexeurs (52, 64), des première et deuxième rangées de tampons FIFO (54, 56 ; 66) respectivement connectées aux démultiplexeurs (52, 64) et des première et deuxième unités de multiplexage (58, 68) respectivement connectées à des sorties des première et deuxième rangées de tampons FIFO (54, 56 ; 66).

6. Réseau optique passif avec protection améliorée selon la revendication 5, **caractérisé en ce que** chaque unité de multiplexage (58, 68) comprend une unité d'inhibition (60, 70) apte à masquer sélectivement des données correspondant aux données d'un sous-ensemble d'unités de réseau optique parmi les unités de réseau optique protégées (16).

7. Réseau optique passif avec protection améliorée selon l'une quelconque des revendications 1 à 6, **caractérisé en ce que** la terminaison de ligne optique (20) comprend une unité de multiplexage à haut débit (50) avec deux entrées connectées respectivement à des sorties en amont des première et deuxième unités de commande multipoint (45, 46).

8. Réseau optique passif avec protection améliorée selon l'une quelconque des revendications 1 à 7, **caractérisé en ce que**
la terminaison de ligne optique (20) comprend une unité de surveillance de protection et de gestion de transfert (49) apte à commander les unités d'inhibition (60, 70),
les unités de réseau optique protégées (16) comprennent une unité de gestion de protocole de protection (94) apte à échanger une signalisation de protection avec l'unité de surveillance de protection et de gestion de transfert (49) à travers les première et deuxième fibres optiques (24, 26).

9. Réseau optique passif avec protection améliorée selon la revendication 8, dans lequel la signalisation comprend l'échange de messages de type PST à deux octets, K1 et K2, comme cela est défini dans la norme ITU G 841 et G 983.5.

10. Réseau optique passif avec protection améliorée selon la revendication 9, **caractérisé en ce que**
les octets K1 et K2 sont portés à l'intérieur de la couche multipoint Mac comme cela est défini dans IEEE 802.3ah dans une trame Ethernet spécifique (200) pour porter ces octets, et **en ce que** la trame spécifique (200) comprend un premier champ de 6 octets (202) contenant des informations d'adresse de destination, un deuxième champ de 6 octets (204) contenant des informations d'adresse de source, un troisième champ de 2 octets (206) comprenant de nouvelles informations de longueur/type, un quatrième champ de 2 octets (208) contenant des informations d'Opcode, un cinquième champ d'un octet (210) contenant des informations sur l'octet K1, un sixième champ d'un octet (212) contenant des informations sur l'octet K2, un septième champ de 42 octets (214) contenant des informations de cadrage, un huitième champ de 4 octets (216) contenant des informations FCS.

11. Procédé de protection dans un réseau optique passif comprenant une terminaison de ligne optique (20) connectée respectivement à des première et deuxième fibres optiques (24, 26), un premier ensemble d'unités de réseau optique (14) connectées à la terminaison de ligne optique (20) à travers uniquement la première fibre optique (24) et un deuxième ensemble d'unités de réseau optique protégées (16) connectées à la terminaison de ligne optique (20) à travers les première et deuxième fibres optiques (24, 26),
la terminaison de ligne optique (20) ayant des première et deuxième unités d'allocation de ressources de transmission dynamique (47, 48) aptes à respectivement et séparément allouer des ressources de transmission pour un premier accès de liaison montante TDMA à utiliser par les unités de réseau optique correspondantes (14, 16) connectées à la première fibre (24) et pour un deuxième accès de liaison montante TDMA à utiliser par les unités de réseau optique correspondantes (16) connectées à la deuxième fibre optique (26),
chaque unité de réseau optique non protégée (14) du premier ensemble étant apte à transmettre sans délai dans la première liaison montante TDMA des données d'utilisateur en fonction d'une première ressource de transmission actuelle spécifique prescrite par la première unité d'allocation de ressources de transmission dynamique (47) et apte à envoyer un statut actuel d'un tampon d'accès d'utilisateur (81) représentatif d'un volume de données à transmettre sur la première liaison montante TDMA par chaque unité de réseau optique non protégée (14) à la première unité d'allocation de ressources de transmission dynamique (47),
chaque unité de réseau optique protégée (16) du deuxième ensemble ayant une unité de données de duplication (90) avec deux tampons d'accès d'utilisateur différents apte à transmettre sans délai et respectivement dans les premier et deuxième accès de liaison montante TDMA les mêmes données d'utilisateur en fonction d'une première ressource de transmission actuelle et d'une deuxième ressource de transmission actuelle respectivement prescrites par les première et deuxième unités d'allocation de ressources de transmission dynamique (47, 48), et apte à envoyer des statuts actuels des deux tampons d'accès d'utilisateur (91, 93) représentatifs d'un premier volume actuel de données et d'un deuxième volume actuel de données à transmettre respectivement sur la première liaison montante TDMA et sur la deuxième liaison montante TDMA par chaque unité de réseau optique protégée (16) respectivement aux première et deuxième unités d'allocation de ressources de transmission dynamique (47, 48),
la terminaison de ligne optique (20) comprenant une liaison (98) entre les première et deuxième unités d'allocation de ressources de transmission dynamique (47,48),
**caractérisé en ce qu'**il comprend les étapes suivantes consistant à :
recevoir (102) respectivement le statut actuel de chaque tampon d'accès d'utilisateur (81, 91) et le statut actuel pour chaque tampon d'accès d'utilisateur (93) par des première et deuxième unités d'allocation de ressources de transmission dynamique respectives (47, 48),
calculer (103) des valeurs de ressources de transmission actuelles à allouer aux unités de réseau optiques (14, 16),
échanger (104) entre les première et deuxième unités d'allocation de ressources de transmission dynamique (47, 48), les valeurs de ressources de transmission respectives actuelles calculées à l'étape (103) à travers la liaison (98),
allouer (105) des première et deuxième ressources de transmission modifiées à une même unité de réseau optique protégée (16) en fonction des première et deuxième ressources de transmission actuelles et des statuts actuels des tampons (91, 93) de sorte que les ressources de transmission modifiées du même réseau optique protégé (16) soient très proches l'une de l'autre et aient tendance à être les mêmes.

12. Procédé de protection dans un réseau optique passif selon la revendication 11, **caractérisé en ce que** l'étape d'allocation (105) pour une même unité de réseau optique protégée (16) comprend les étapes suivantes :
- calculer une première valeur d'affectation en tant que valeur minimale parmi les première et deuxième ressources de transmission actuelles,
- calculer un premier reste actuel du premier tampon (91) en tant que différence entre le premier volume actuel de données et la première ressource de transmission actuelle,
- calculer un deuxième reste actuel du deuxième tampon (93) en tant que différence entre le deuxième volume actuel de données et la deuxième ressource de transmission actuelle,
- calculer une deuxième valeur d'affectation en tant que différence entre la première valeur d'affectation et la valeur absolue de la différence entre les premier et deuxième restes actuels, si la différence entre la première valeur d'affectation et la valeur absolue est positive, sinon calculer la deuxième valeur d'affectation comme étant égale à zéro,
- déterminer la première ressource de transmission modifiée en tant que première valeur d'affectation si le premier reste actuel est supérieur au deuxième reste actuel, sinon déterminer la première valeur d'affectation en tant que deuxième ressource de transmission modifiée,
- déterminer la deuxième ressource de transmission modifiée en tant que deuxième valeur d'affectation si la première valeur d'affectation a été déterminée en tant que première ressource de transmission modifiée, sinon déterminer la deuxième valeur d'affectation en tant que première ressource de transmission modifiée.

13. Procédé de protection selon l'une quelconque des revendications 11 à 12, **caractérisé en ce qu'**il comprend une étape consistant à :
lorsqu'un défaut est détecté, exécuter un transfert (114) en commutant partiellement ou totalement le flux de données de trafic de la deuxième fibre optique (26) à la première fibre optique (24) par l'activation d'une deuxième unité d'inhibition (70) pour les données reçues de la deuxième fibre optique (26) et la désactivation d'une première unité d'inhibition (60) pour les données reçues de la première fibre optique (24),
la désactivation de l'unité d'inhibition (60) du premier multiplexeur (58) est soit totale, ce qui permet à toutes les données de la première liaison montante TDMA correspondant aux unités de réseau optique (16) de passer et d'être multiplexées, soit partielle, ce qui permet aux données de la première liaison montante TDMA correspondant aux unités de réseau optique sélectionnées (16) de passer et d'être multiplexées,
l'activation de la deuxième unité d'inhibition (70) du deuxième multiplexeur (68) par rapport à la désactivation de l'unité d'inhibition (60) est soit totale, en masquant toutes les données de la deuxième liaison montante TDMA, soit partielle, en masquant sélectivement les données de la deuxième liaison montante TDMA.

14. Procédé de protection selon l'une quelconque des revendications 11 à 13, **caractérisé en ce qu'**il comprend les étapes consistant à :
échanger (111) des données de gestion de protection, et
tester (112) s'il y a un défaut.

15. Procédé de protection selon la revendication 14, dans lequel les données de gestion de protection sont définies dans la norme ITU G 841 et G 983.5.
